(19) Europäisches Patentamt / European Patent Office / Office européen des brevets

(11) **EP 2 034 698 B1**

(12) **EUROPEAN PATENT SPECIFICATION**

(45) Date of publication and mention
of the grant of the patent:
**21.02.2018 Bulletin 2018/08**

(21) Application number: **08075866.7**

(22) Date of filing: **19.02.2004**

(51) Int Cl.:
*H04L 29/08* (2006.01)      *H04L 12/26* (2006.01)
*H04L 12/18* (2006.01)      *H04N 7/24* (2011.01)
*H04L 29/06* (2006.01)

(54) **METHOD FOR TRACKING THE SIZE OF A MULTICAST AUDIENCE**

VERFAHREN ZUM VERFOLGEN DER GRÖSSE EINER MULTICAST-EMPFÄNGERGRUPPE

PROCÉDÉ DE SUIVI DE LA TAILLE D'UNE AUDIENCE DE MULTIDIFFUSION

(84) Designated Contracting States:
**AT BE BG CH CY CZ DE DK EE ES FI FR GB GR
HU IE IT LI LU MC NL PT RO SE SI SK TR**

(30) Priority: **19.02.2003 GB 0303812**

(43) Date of publication of application:
**11.03.2009 Bulletin 2009/11**

(62) Document number(s) of the earlier application(s) in
accordance with Art. 76 EPC:
**04712598.4 / 1 597 901**

(73) Proprietor: **British Telecommunications public
limited company**
**London EC1A 7AJ (GB)**

(72) Inventors:
• **Burbridge, Trevor**
**Ipswich, Suffolk IP4 4HB (GB)**
• **Nekovee, Mazier**
**Kesgrave, Suffolk IP5 2EQ (GB)**
• **Soppera, Andrea**
**Ipswich, Suffolk IP2 8JS (GB)**

(74) Representative: **British Telecommunications
public limited company**
**Intellectual Property Department**
**Ground Floor, Faraday Building**
**1 Knightrider Street**
**London EC4V 5BT (GB)**

(56) References cited:
• **Maziar Nekovee ET AL: "An Adaptive Method for
Dynamic Audience Size Estimation in Multicast"
In: "Field Programmable Logic and Application",
19 September 2003 (2003-09-19), Springer Berlin
Heidelberg, Berlin, Heidelberg, XP055155704,
ISSN: 0302-9743 ISBN: 978-3-54-045234-8 vol.
2816, pages 23-33, DOI:
10.1007/978-3-540-39405-1_3, * the whole
document ***
• **ALOUF S: "Estimation de paramètres et analyse
des performances de diverses applications
réseaux / Parameter estimation and performance
analysis of several network applications", THESE
PREPARÉE À L'INRIA SOPHIA ANTIPOLIS ET
PRÉSENTÉE ÀL'UNIVERSITÉE DE NICE -
SOPHIA ANTIPOLIS POUR OBTENIR LE GRADE
DE DOCTEUR SPÉCIALITÉ INFORMATIQUE, XX,
XX, 8 November 2002 (2002-11-08), XP002279352,
-& S. ALOUF ET AL: "Optimal estimation of
multicast membership", IEEE TRANSACTIONS
ON SIGNAL PROCESSING, vol. 51, no. 8, 31
August 2003 (2003-08-31), pages 2165-2176,
XP055155622, ISSN: 1053-587X, DOI:
10.1109/TSP.2003.814461**

**Description**

The present invention is concerned with measuring audience size, and especially of estimating the size of a dynamically changing audience in multicast transmission.

One form of multicast is an IP technology that allows for streams of data to be sent efficiently from one to many destinations. Instead of setting up separate unicast sessions for each destination, multicast will replicate packets at router hops where the path to different multicast group members diverges. This allows a source to send a single copy of a stream of data, while reaching thousands or millions of receivers. In conventional unicast communication the sender sets up a separate transmission session for each audience member and can track the size of the audience by counting the number of requested streams in the server log file. In multicast communication the server sets up only one stream of data which is sent to a single multicast address, instead of being addressed separately to each receiver. Any host that is interested in that stream of data then joins the corresponding multicast group and picks up the data stream from its local router. The size of the audience is therefore hidden from the sender and could vary rapidly in time.

The situation is very similar to conventional radio and TV broadcasting: the radio or TV station sends out the programmes to ether and receivers can listen or watch their favourite programme by tuning their receivers to the channel over which the programme is sent.

Tracking the size of multicast groups is technologically important for several applications:

- Multicast is used for real-time delivery of audio and video streams over the Internet to a very large audience. The revenue generated from these applications is mainly from advertising and depends very much on estimates of the audience size and its variation in time.

- Multicast is used for large-scale publish- subscribe applications. In these applications subscribers register their interest in a topic or a pattern of events and they asynchronously receive events matching their interest. By subscribing to a topic the subscriber become a member of the multicast group corresponding to that topic (e.g. share price of a certain company) and receives a notification whenever that topic is updated. The publish-subscribe servers can update on a regular basis users' interest in topics (the number of listeners per topic) in order to optimise the division of topics and the distribution of them among multicast groups.

Measurement of the multicast audience size (and other statistics) can be performed on the network layer. In this approach memory tables are captured from network routers in parallel and are transferred to the monitoring unit. The monitoring then extracts the size of the multicast group (and other statistics) from these tables (See K. Sarac, K. Almeroth, "Supporting multicast deployment efforts: a survey of tools for multicast monitoring", Journal of High Speed Networks, vol. 9, no 3-4, 2000 and P. Rajvaida, K Almeroth and K. Claffy, "A scalable architecture for monitoring and visualizing multicast statistics, Proc. of 11th IIFIP/IEEE International Workshop on Distributed Systems (DSOM2002), Austin, Texas, USA, December 2000.).

Three problems with this approach are

- It requires that the monitoring unit have access to networks multicast routers. A requirement which is not feasible in many situations. Furthermore, even if the monitoring unit could access the multicast routers, current standards do not require these routers to maintain a count of the number of local receivers.

- It is not applicable to application-level multicast where multicast transmission is built as an overlay on top of a network without multicast capability.

- The method is not scalable to the publish- subscribe scenarios described above, where billions of subscribers have subscribed to million of multicast group (due to implosion of information at the monitoring unit).

In the literature a number of solutions have been suggested for the problem of real-time end-to-end estimation of audience size for large-scale multicast transmission. Two known technologies are the methods suggested by Lieu and Nonnenmacher (C. Lieu and J. Nonnemacher, "Broadcast audience estimation", in Proc. of IEEE INFOCOM 2000, Tel Aviv, Israel, March 2000, vol 2, pp 952-960) for estimating a static audience size, and the method of Alouf, Altman and Nain (S. Alouf, E. Altman and P. Nain, "Optimal on-line estimation of the size of a dynamic multicast group",http://www-sop.inria.fr/mistral/personnel/Sara.Alouf/Publications/multicast.pdf; Proceedings of INFOCOM2002, New York, USA, June 2002) to estimate a dynamically changing audience and Alouf "Estimation de paramètres et analyse des performances de diverse application réseaux" doctoral thesis, University of Nice, Sophia Antipolis, France. Both methods are based on random sampling of feedback messages from a group of the audience by the sender. From this random sample the size of the audience is then inferred using statistical techniques.

Friedman et al: "Multicast Session Membership Size Estimation" infocom '99. eighteenth annual joint conference of the IEEE computer and communications societies, proceedings. IEEE New York, NY, USA 21-25 march 1999, Piscataway, NJ, USA,IEEE, US, 21 March 1999 (1999-03-21), pages 965-972, XP010323794 ISBN: 0-7803-5417-6 is concerned with probabilistic polling algorithms for the estimation of the size of static multicast audience, and controlling feedback under such a static setting.

Bolot J-C et al: "Scalable Feedback Control for Multicast Video Distribution in the Internet" computer communication review, association for computing machinery. new york, us, vol. 24, no. 4, 1 October 1994 (1994-10-01), pages 58-67, XP000477042 ISSN: 0146-4833 describes a mechanism for control of multicast continuous media streams aiming at soliciting feedback in a scalable manner.

In the Lieu et al method, random sampling is done using a timer-based method (See also J. Nonnemacher and E. Biersack, "Scalable feedback for large groups", IEEE/ACM Trans. On Networking, vol. 7 no. 3, pp. 375-386, June 1999, and our European patent application 02254355.7 dated 21st June 20902 'Timer-based feedback in multicast communication", M. Nekovee and S. Olafsson). In this method the sender sends a timer distribution f(t) to all receivers, together with the feedback request. Upon receiving the feedback each receiver samples a backoff time from f(t). After expiry of this time, the receiver remains silent if it has detected a feedback message from any other receiver, otherwise it sends a feedback to sender (And all other receivers), which contains the expiry time of receiver's timer. The sender collects all feedback. Using a combination of the feedback count and the expiry times of receivers' timers, the receiver makes an statistical estimate of the audience size. To achieve high accuracy in the audience estimate this procedure has to be repeated for many rounds since the estimation error decreases only as $1/\sqrt{M}$ where $M$ is the number of rounds. The main technological problems with this approach are

- The estimation procedure works well for a static audience size but is not suitable for a dynamically changing audience size. This is because the method requires several rounds of feedback collection from the same audience in order to accurately estimate the size and the estimate becomes inaccurate when the audience size changes during these collection rounds.

- The timer-based random sampling from the audience requires that each feedback message is send via multicast to all the audience. The overhead to process these messages is small when the sample size (i.e. the number of receivers that sends a message at each round) is small and we are considering only one multicast group. But the overhead can become large when receivers are on several multicast groups at the same time and so will receive feedback messages from all these groups.

- The timer-based mechanism for sampling is biased towards receivers with the smallest round-trip time (RTT) to sender since, on average, these receivers are more likely to send a feedback messages. This bias reduces the accuracy of the audience size estimates. Also, it makes the polling mechanism unfair since receivers with an RTT larger than average are much less likely to be "heard" by the sender.

The method of Alouf, Altman and Nain removes some of these problems by using a simpler mechanism for random sampling based on probabilistic multicast (See M. H. Ammar, "Probabilistic multicast: Generalising the Multicast Paradigm to Improve Scalability, in Proc. of IEEE INFOCOM94, Toronto, Canada, June 1994, pp848-855.). In this method the sender sends a request for feedback to all receivers. Upon receiving the request each receiver sends feedback, or not, according to a specified probability Since each receiver decides independently from the rest whether to send or not to send a message, the sampling mechanism is not affected by sender-receiver and receiver-receiver RTT times and is not biased towards receivers with smaller RTTs.

The average number of messages sent is a random variable, which has a Binomial probability distribution function (pdf). Just like the timer-based approach, the sender estimates the audience size from the feedback count using well-known statistic estimation techniques.

The method of Alouf, Altman and Nain provides a solution for the problem of dynamically changing audience size by taking advantage of the statistical dependence between the audience size at consecutive feedback rounds, to enhance the accuracy of the instantaneous estimates. This is achieved by assuming that (i) the variation of the audience size is described by that of the population of a so-called *M/M/∞* queue in heavy traffic (see Leonard Kleinrock, Queueing Systems, Vol I, John Wiley & Sons, New York 1975), (ii) neither feedback requests nor feedback messages are lost and (iii) the audience size is small such that there is no risk of feedback implosion.

The technologically remaining problems with this approach are

- The method does not scale to very large multicast groups, which is the typical situations in scenarios we discussed earlier on (Internet and Intranet TV and radio broadcasts, publish-subscribe). This is because the response probability is chosen independently of the size of the audience and so the average number of feedback messages grows as the audience size increases, resulting eventually in feedback implosion, though the possibility is mentioned of reducing the probability slightly if the number of acknowledgements becomes too high.

- The filter parameters are fixed in advance. They do not adapt to possible variations in population size and dynamics.
- The algorithm assumes that neither feedback requests nor feedback messages can be lost in the network and is vulnerable in real network scenarios where high packet loss rates could be experienced.

According to the present invention there is provided a method of estimating the size of a multicast audience comprising repeatedly:

(a) transmitting to receivers receiving the multicast a request including a probability parameter value P, whereby each receiver replies or not with a corresponding probability;
(b) counting the number r of replies to the request;
(c) determining, from the count and probability parameter value, an estimate of the number of receivers;
(d) filtering the estimate based on a parameter value;

including adaptively adjusting the parameter value of said filtering of the estimate as a function of the power spectrum of past values of the estimate.

Other aspects of the invention are defined in the claims.

Some embodiments of the invention will now be described, with reference to the accompanying drawings, in which:

Figure 1 is a schematic diagram of a network; and
Figure 2 is a flowchart illustrating the operation of one embodiment of the invention.

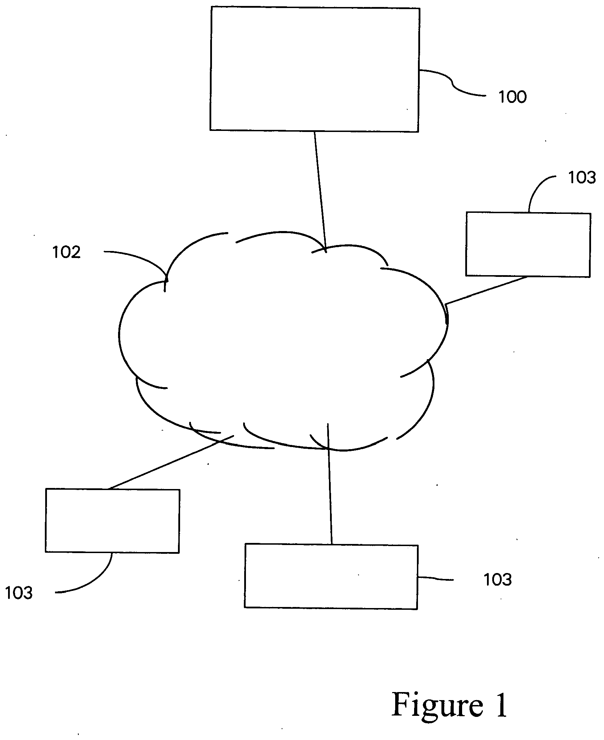

Figure 1 shows a multicast arrangement with a server 100 connected via an IP network 102 (such as the internet) to a number of receiving terminals 103 (only three of which are shown). The multicasting operation operates in conventional manner and therefore only the additional functionality now proposed for measuring audience size will be described.

We consider a sender (i.e. the server 100) who is sending messages to a multicast group. Group members (103) can join and leave the group at any time. An example is when multicast is used for broadcasting TV over the internet. The audience can watch a certain programme by joining the multicast group corresponding to the channel that broadcasts the programme, and leave the multicast group at any time during the programme.

The measurement process now to be described is implemented by:

Additional software at the sender to (a) construct and periodically transmit request messages via the multicast mechanism, (b) count replies from the terminals and (c) process the results; and additional software at each terminal to process such requests and generate replies where appropriate. The size of the audience is a time-dependent stochastic variable, which we denote with $N(t)$. We assume that sender can handle a maximum number $r_{max}$ of feedback messages per feedback round. The aim is to accurately estimate $N(t)$ (and possibly other receiver attributes) in real time through feedback counts $r(t)$ from the receivers, while minimising the risk of feedback implosion (which happens when $r(t)$ exceeds $r_{max}$) at all times.

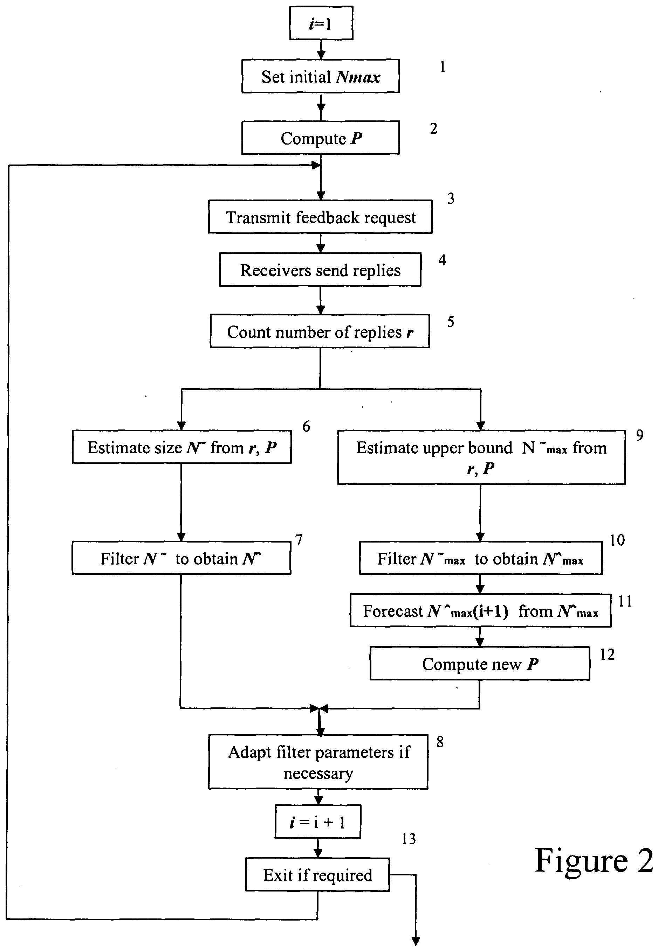

The process will now be described with reference to the flowchart shown in Figure 2.

1. The estimation starts with an initial guess for the maximum audience size $N_{max}$.
2. An initial value for the response probability $P$ is then obtained by choosing $P$ as the maximum response probability for which the risk for feedback implosion is below a user-defined risk threshold $\delta$, given $N_{max}$. Since the number of feedback messages has a Binomial probability distribution function, the probability that the number of feedback messages exceeds $r_{max}$ given a population of size $N_{max}$ is given by

$$\Pr(r \geq r_{max}) = 1 - \Pr(r < r_{max}) = 1 - \sum_{r=1}^{r_{max}} B(N_{max}, P) = I_p(r_{max} + 1, N_{max} - r_{max})$$

and so the maximum possible value of $P$ could be obtained by solving

$$I_P(r_{max} + 1, N_{max} - r_{max}) = \delta \tag{1}$$

In the above equations, $B(N_{max}, P)$ is the binomial distribution and $I_p$ represents the incomplete Beta function

$$\text{i.e. } I_P(a,b) = \frac{\int_0^P t^{a-1}(1-t)^{b-1}\,dt}{\int_0^1 t^{a-1}(1-t)^{b-1}\,dt}$$

In the current implementation a version of Newton-Raphson iteration method is used to find $P$ numerically from Equation (1).

3. Once $P(t_1)$ is found the sender multicasts a request for feedback (which contains the value of $P$).

4. Each receiver selects a random number $X$ in the range $0 \le X \le 1$ and transmits a feedback message only if $X \le P(t_1)$

5. The sender collects a total of r feedback messages from this round.

6. The audience size is then estimated as:

$$\tilde{N}(t_1) = \frac{r(t_1)}{P(t_1)} \pm \gamma \tag{2}$$

Where $\gamma$ is a stochastic estimation error. It is not essential to compute this, but, if required, it is proportional to

$$\frac{1 - P(t_1)}{P(t_1)}.$$

(Equation 2, and the corresponding error expression were derived using the well-known maximum likelihood method of statistical estimation theory, applied to a Binomial distribution with unknown parameter $N(t)$.)

Note that the two branches shown in the flowchart are drawn for clarity to show that there are two estimation processes operating; they are not alternative paths.

7. The estimate for the audience size (Equation (2)) contains statistical estimation error whose magnitude is inversely proportional to the size of the sampled receivers. We provide a method for reducing the estimation error in real-time, making use of the available past data. As shown, this takes place during the measurement process, after each measurement (see below for an alternative implementation). This is achieved by considering the estimation error $n(t)$ as time-dependent noise, which is superimposed on the exact value of the audience size $N(t)$.

The signal to noise ratio in the measured audience size $\tilde{N}(t) = N(t) + n(t)$ is then maximised by filtering $\tilde{N}(t)$ with a Wiener filter which provides the best mean-square estimate of the audience population. Initially the filter parameters are fixed based on historical information on the audience size variations, and the application under consideration (e.g. Internet TV, publish-subscribe etc.) but as the audience size measurements progresses, these parameters are periodically re-calculated such that they can adapt to the actual pattern of audience size variations.

The improved estimate of the audience size at time $t_i$ is obtained from

$$\hat{N}(t_i) = \sum_{j=1}^{i} h(t_i - t_j)\tilde{N}(t_j) = (\beta - \alpha)\sum_{j=1}^{i} \tilde{N}(t_j)\exp(-\beta(t_i - t_j)) \tag{3}$$

Here

$$h(t_i - t_j) = (\beta - \alpha)\exp(-\beta(t_i - t_j)) \tag{4}$$

is the optimal Wiener filtering kernel.

The kernel is obtained by making the assumption that the signal ($N(t)$) and the noise ($n(t)$) are statistically uncorrelated and that the power spectra $N_P(\omega)$ and $n_P(\omega)$ of these can be approximated by:

$$N_P(\omega) = \frac{\alpha K}{\omega^2 + \alpha^2} \tag{5}$$

$$n_P(\omega) = A \tag{6}$$

where $K, \alpha$ and $A$ are adjustable parameters , and

$$\beta^2 = \alpha^2 + \frac{K}{A}. \tag{7}$$

It follows that this represents a model of the power spectrum $\tilde{N}_P(\omega)$ of the audience size $\tilde{N}(t)$ for which

$$\tilde{N}_P(\omega) = N_P(\omega) + n_P(\omega) = \frac{\alpha K}{\omega^2 + \alpha^2} + A \tag{8}$$

The above choice for $N_P(\omega)$ is motivated by the fact that the $\alpha \to 0$ limit of Equation (5) exactly models a slowly varying audience size, while by increasing $\alpha$ general time- varying audiences sizes can be modelled with an accuracy which is sufficient for determination of filter parameters. Furthermore, the form assumed for $n_P(\omega)$ corresponds to the assumption of white noise. Our simulation studies show that this is a reasonable estimate of the statistical noise in the audience size measurements.

8. Adaptation of the filter parameter $\beta$ during the process of audience size measurement is performed in the following way. The sender accumulates past values of $\tilde{N}(t)$ over a sliding window of size M. It then makes an estimate of the power spectra of the signal and noise by performing a fast-Fourier transform (FFT) on the past values of $\tilde{N}(t)$ (if the data points are not evenly distributed the Lomb algorithm is used to evaluate the power spectrum). These spectra are then fitted to the parameterised form given by Equation (8), using the least-square method, to obtain new values for the parameters $K, \alpha$ and A, from which a new value for the filter parameter $\beta$ is obtained using Equation (7).

Note that because the filter kernel $h(t)$ decays exponentially in time it is sufficient in practice to accumulate past statistics only for an interval of size $\approx 1/\beta$. Assuming the population is sampled at an average rate $f = \dfrac{1}{T}$, the number of past statistics that need to be accumulated should be $M \approx \dfrac{f}{\beta}.$

Note that the adaptation step does not necessarily have to occur on every iteration.

9. In addition to estimating the size of the audience we provide a method for dynamically estimating an upper bound for the audience size. This is done in the following way: given the number of received feedback messages $r(t_1)$ and a risk parameter $\varepsilon$, find the maximum possible size of the audience, which can result with probability $1-\varepsilon$ in $r(t_1)$ feedback messages. Using Bayes theorem and making a Poisson approximation of the binominal probability distribution function, it can be shown that the conditional probability of the size of the audience exceeding a certain value $N_{max}$, given observation $r(t_i)$, is given by

$$\Pr(N(t_i) \geq N_{max} \mid r(t_i)) \propto Pg(r(t_i) + 1, PN_{max})$$

where Pg is the incomplete gamma function.

From this the maximum possible size $\tilde{N}_{max}(t_i)$ is obtained by solving (using a version of the Newton-Raphson iteration)

$$Pg\left(r(t_i), P(t_i)\tilde{N}_{max}(t_i)\right) = 1 - \varepsilon \tag{9}$$

where Pg is the incomplete gamma function.

10. This estimate $\tilde{N}_{max}(t_i)$ is then filtered, in the same manner as described in step (7), to provide a filtered estimate $\hat{N}_{max}(t_i)$ of the upper bound of the audience size, using equation (10):

$$\hat{N}_{max}(t_i) = \sum_{j=1}^{i} h(t_i - t_j)\tilde{N}_{max}(t_j) = (\beta - \alpha)\sum_{j=1}^{i} \tilde{N}_{max}(t_j)\exp(-\beta(t_i - t_j)) \tag{10}$$

In this version, the parameters used are those used in Step 7 (and adapted at 8).

11. This estimate $\hat{N}_{max}(t_i)$ is then used to forecast the maximum audience size at the next round as follows:

$$\hat{N}_{max}(t_{i+1}) = \hat{N}_{max}(t_i) + (t_{i+1} - t_i)\frac{\hat{N}_{max}(t_i) - \hat{N}_{max}(t_{i-1})}{t_i - t_{i-1}} \quad \text{if} \quad \hat{N}_{max}(t_i) > \hat{N}_{max}(t_{i-1})$$

$$\hat{N}_{max}(t_{i+1}) = \frac{\hat{N}_{max}(t_i) + \hat{N}_{max}(t_{i-1})}{2} \qquad \text{otherwise} \tag{11}$$

12. Using this forecast the sampling probability $P(t_{i+1})$ is calculated from Equation (1) and a new feedback request, containing $P(t_{i+1})$ is sent to receivers. That is, the above steps are repeated from Step (3). Once a desired number of measurements have been collected, this iteration ceases at Step 13.

Some optional modifications and additional steps will now be described:

A. The filtering at Step 7 is shown above as being performed whilst measurement is continuing, which can be advantageous where measurements are needed in near-real time so that the filtered results $\tilde{N}(t)$ are available while the measurement process is continuing. However, performing this filtering offline as described above can be advantageous in that the filter then has access to all the data. In this case the filtering 7 (and adaptation 8) occurs after exit from the iteration. However the filtering at Step 10 of the upper bound $\tilde{N}_{max}$ necessarily must remain within the loop and hence adaptation must also occur within the loop. In this case it becomes possible to use a non-causal filter; if this is done, the filter kernel should be modified to accommodate negative values of $(t_i - t_j)$ by using, instead of Equation (4),

$$h(t) = \frac{\alpha K}{2A\beta}e^{-\beta|t|} \tag{12}.$$

B. Increasing the robustness of estimation algorithm against network losses If the network is lossy, some of the requests for feedback can be lost before they reach the receivers. Also it can happen that some of feedback messages from receivers do not arrive at the sender. The maximum-likelihood estimate of the audience size (Equation 2) is obtained under the assumption that there is no loss in the networks such that all receivers respond to a request for feedback with equal probabilities $P$.

This method provides a method for taking into account, in an average way, the effect of losses in estimating the audience size.

If the probability of loss at a receiver is $q_j$ (for receiver $j$), then the probability that a feedback message from this receiver reaches the sender is no longer $P$ but would be $P_j = P(1-q_j)^2$. We take this effect into account in our estimation procedure in the following way. We assume that each receiver measures its own loss probability (the receivers can do this, for example, by counting the number of packets that have not arrived from each multicast group they belong to by looking at packet sequence). During feedback collection those receivers whose response is sampled send this measurement back to the sender. From this the sender estimates the average packet loss $\overline{q}$ and takes this into account by replacing $P$ with $(1-\overline{q})^2 P$ in the maximum-likelihood estimate of the audience size. The corrected estimate for the audience size is then obtained from

$$\tilde{N}_{loss}(t) = \frac{r(t)}{(1-\overline{q})^2 P(t)} = \tilde{N}(t)(1 + 2\overline{q} + 3\overline{q}^2 + ...) , \qquad (13)$$

Where the term in the bracket is a correction to the estimated audience size, resulting from network losses. This modification is implemented by using Equation (13) instead of Equation (2).

C. Relaxing the feedback implosion limit

The implosion of feedback occurs when the number of feedback messages that simultaneously reach the sender exceeds $r_{max}$. In addition to choosing the value of response probability $P$ such that the chance of implosion is below a certain threshold, the sender can further reduce the possibility of implosion by stretching the interval over which it receives the responses. This can be achieved by sending together with the parameter $P$ a second parameter $S$. The feedback procedure is then modified as follows:

Each receiver selects a uniform random number $X$ and decides to send a feedback only if $X < P$. After making the decision it selects a random number $s$ which is uniformly distributed in the interval [0, S] and waits for a time $s$ before sending its feedback. The net effect of this algorithm is to spread the feedback from receivers over an interval $S$ so that the average number of feedback messages that are sent per unit time is given by $\dfrac{r}{1+S}$ and feedback implosion can be avoided if $r < (1+S)r_{max}$. So the implosion limit is effectively $(1+S)r_{max}$, instead of $r_{max}$. In Step (2), Equation (1) is then modified by inserting $(1+S)r_{max}$ in place of $r_{max}$ and so that the new limit is then used to calculate P. The value of P calculated from this will be larger than the value calculated using $r_{max}$ (we know this from the shape of gamma function), and therefore more feedbacks will be generated per round and the accuracy of population estimation is improved.

The above-described method deals with end-to-end methods where audience estimation can be done at the application level without any assistance from network routers, and with very large-scale Multicast scenarios in mind.
It alleviates some of the problems discussed earlier by using an adaptive method for sampling feedback from receivers and a method for adapting the filtering of statistical errors to dynamic variations of the audience size.
The adaptive sampling method minimises the risk of feedback implosion and at the same time helps to ensure that the sender receives the maximum possible number of feedback messages. The adaptive filtering adjusts dynamically to the pattern of the audience's size variation in time in order to maximise the signal to noise ratio of the estimate. Furthermore, we have described a procedure for improving the robustness of the estimation method to large packet losses in the network and a method for relaxing the implosion limit using random timers.

**Claims**

1. A method of estimating the size of a multicast audience comprising repeatedly:

    (a) transmitting to receivers (103) receiving the multicast a request including a probability parameter value P, whereby each receiver replies or not with a corresponding probability;
    (b) counting the number r of replies to the request;
    (c) determining, from the count and probability parameter value, an estimate of the number of receivers;
    (d) filtering the estimate based on a filter parameter value;

    including adaptively adjusting the filter parameter value as a function of the power spectrum of past values of the estimate.

2. A method according to claim 1 in which the filtering of the estimates is performed by a Wiener filter.

3. A method according to any one of the preceding claims in which said filtering of the estimate is performed after ceasing to determine said estimate.

4. A method according to any one of the preceding claims in which said filtering of the estimate is performed each time a new estimate is determined.

5. A method according to any one of the preceding claims including determining from the count a new probability parameter value to be included in a subsequent step (a).

6. A method according to any one of the preceding claims in which the method further includes: repeatedly computing a new probability parameter value to be included in a subsequent step (a), by forecasting, from the count and probability parameter value, an upper bound for the number of receivers and determining therefrom the new probability parameter value.

7. A method according to any one of the preceding claims including measuring the probability of loss of requests or replies and applying a correction to the estimate of the number of receivers.

8. A method according to any one of the preceding claims including transmitting to the receivers (103) together with the probability parameter value P, a second parameter S, whereby each receiver that replies waits a selected random time which is uniformly distributed in the interval [0, S]

**Patentansprüche**

1. Verfahren zum Schätzen der Größe einer Multicast-Empfänger-Gruppe, das wiederholt umfasst:

   (a) Übermitteln einer Anfrage, die einen Wert eines Wahrscheinlichkeits-Parameters P enthält, an Empfänger (103), welche die Multicast-Übertragung empfangen, wobei jeder Empfänger mit einer entsprechenden Wahrscheinlichkeit antwortet oder nicht;
   (b) Zählen der Anzahl r von Antworten auf die Anfrage;
   (c) Ermitteln eines Schätzwertes der Anzahl von Empfängern aus dem Zählwert und dem Wert des Wahrscheinlichkeits-Parameters;
   (d) Filtern des Schätzwertes auf der Basis eines Wertes eines Filter-Parameters,

   wobei das Verfahren die adaptive Einstellung des Wertes des Filter-Parameters als Funktion des Leistungsspektrums von früheren Werten des Schätzwertes beinhaltet.

2. Verfahren nach Anspruch 1, bei dem das Filtern der Schätzwerte durch ein Wiener-Filter durchgeführt wird.

3. Verfahren nach einem der vorhergehenden Ansprüche, bei dem das Filtern des Schätzwertes nach Beenden der Ermittlung des Schätzwertes durchgeführt wird.

4. Verfahren nach einem der vorhergehenden Ansprüche, bei dem das Filtern des Schätzwertes jedes Mal, wenn ein neuer Schätzwert ermittelt wird, durchgeführt wird.

5. Verfahren nach einem der vorhergehenden Ansprüche, das einschließt: Ermitteln eines neuen Wertes des Wahrscheinlichkeits-Parameters, der in einem nachfolgenden Schritt (a) einzusetzen ist, aus dem Zählwert.

6. Verfahren nach einem der vorhergehenden Ansprüche, wobei das Verfahren ferner beinhaltet: Wiederholtes Berechnen eines neuen Wertes des Wahrscheinlichkeits-Parameters, der in einem nachfolgenden Schritt (a) einzusetzen ist, durch Prognostizieren einer oberen Grenze für die Anzahl von Empfängern aus dem Zählwert und dem Wert des Wahrscheinlichkeits-Parameters und Ermitteln des neuen Wertes des Wahrscheinlichkeits-Parameters daraus.

**7.** Verfahren nach einem der vorhergehenden Ansprüche, das einschließt: Messen der Wahrscheinlichkeit des Verlustes von Anfragen oder Antworten und Anwenden einer Korrektur auf den Schätzwert der Anzahl von Empfängern.

**8.** Verfahren nach einem der vorhergehenden Ansprüche, das einschließt: Übermitteln eines zweiten Parameters S zusammen mit dem Wert des Wahrscheinlichkeits-Parameters P an die Empfänger (103), wobei jeder Empfänger, der antwortet, eine ausgewählte zufällige Zeit wartet, die in dem Intervall (0, S) gleich verteilt ist.

**Revendications**

**1.** Procédé d'estimation de la taille d'une audience de multidiffusion comprenant répétitivement :

(a) la transmission à des récepteurs (103) recevant la multidiffusion d'une demande incluant une valeur de paramètre de probabilité P, d'où il résulte que chaque récepteur répond ou non avec une probabilité correspondante ;
(b) le décompte du nombre r de réponses à la demande ;
(c) la détermination, à partir du décompte et de la valeur de paramètre de probabilité, d'une estimation du nombre de récepteurs ;
(d) le filtrage de l'estimation sur la base d'une valeur de paramètre de filtre ;

incluant l'ajustement adaptatif de la valeur de paramètre de filtre comme une fonction du spectre de puissance de valeurs passées de l'estimation.

**2.** Procédé selon la revendication 1 dans lequel le filtrage des estimations est effectué par un filtre de Wiener.

**3.** Procédé selon l'une quelconque des revendications précédentes dans lequel ledit filtrage de l'estimation est effectué après la fin de la détermination de ladite estimation.

**4.** Procédé selon l'une quelconque des revendications précédentes dans lequel ledit filtrage de l'estimation est effectué à chaque fois qu'une nouvelle estimation est déterminée.

**5.** Procédé selon l'une quelconque des revendications précédentes incluant la détermination à partir du décompte d'une nouvelle valeur de paramètre de probabilité destinée à être incluse dans une étape (a) suivante.

**6.** Procédé selon l'une quelconque des revendications précédentes dans lequel le procédé inclut en outre : le calcul répétitif d'une nouvelle valeur de paramètre de probabilité destinée à être incluse dans une étape (a) suivante, en prévoyant, à partir du décompte et de la valeur de paramètre de probabilité, une limite supérieure pour le nombre de récepteurs et en déterminant à partir de celle-ci la nouvelle valeur de paramètre de probabilité.

**7.** Procédé selon l'une quelconque des revendications précédentes incluant la mesure de la probabilité de perte de demandes ou de réponses et l'application d'une correction à l'estimation du nombre de récepteurs.

**8.** Procédé selon l'une quelconque des revendications précédentes incluant la transmission aux récepteurs (103) ensemble avec la valeur de paramètre de probabilité P d'un deuxième paramètre S, d'où il résulte que chaque récepteur qui répond attend une durée aléatoire sélectionnée qui est uniformément distribuée dans l'intervalle [0,S].

Figure 1

$i=1$

Set initial *Nmax* — 1

Compute *P* — 2

Transmit feedback request — 3

Receivers send replies — 4

Count number of replies *r* — 5

Estimate size $N^{\sim}$ from *r*, *P* — 6

Estimate upper bound $N^{\sim}{}_{max}$ from *r*, *P* — 9

Filter $N^{\sim}$ to obtain $N^{\wedge}$ — 7

Filter $N^{\sim}{}_{max}$ to obtain $N^{\wedge}{}_{max}$ — 10

Forecast $N^{\wedge}{}_{max}(i+1)$ from $N^{\wedge}{}_{max}$ — 11

Compute new *P* — 12

Adapt filter parameters if necessary — 8

$i = i + 1$

Exit if required — 13

## Figure 2

**EP 2 034 698 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 02254355 A

**Non-patent literature cited in the description**

- **K. SARAC ; K. ALMEROTH.** Supporting multicast deployment efforts: a survey of tools for multicast monitoring. *Journal of High Speed Networks,* 2000, vol. 9 (3-4
- **P. RAJVAIDA ; K ALMEROTH ; K. CLAFFY.** A scalable architecture for monitoring and visualizing multicast statistics. *Proc. of 11th IIFIP/IEEE International Workshop on Distributed Systems (DSOM2002),* December 2000
- **C. LIEU ; J. NONNEMACHER.** Broadcast audience estimation. *Proc. of IEEE INFOCOM 2000,* March 2000, vol. 2, 952-960
- **S. ALOUF ; E. ALTMAN ; P. NAIN.** Optimal on-line estimation of the size of a dynamic multicast group. *Proceedings of INFOCOM2002,* June 2002, http://www-sop.inria.fr/mistral/personnel/Sara.Alouf/Publications/multicast.pdf

- Multicast Session Membership Size Estimation. **FRIEDMAN ET AL.** infocom '99. eighteenth annual joint conference of the IEEE computer and communications societies, proceedings. IEEE, 21 March 1999, 965-972
- **BOLOT J-C et al.** Scalable Feedback Control for Multicast Video Distribution in the Internet. *computer communication review, association for computing machinery,* 01 October 1994, vol. 24 (4), ISSN 0146-4833, 58-67
- **J. NONNEMACHER ; E. BIERSACK.** Scalable feedback for large groups. *IEEE/ACM Trans. On Networking,* June 1999, vol. 7 (3), 375-386
- **M. H. AMMAR.** Probabilistic multicast: Generalising the Multicast Paradigm to Improve Scalability. *Proc. of IEEE INFOCOM94,* June 1994, 848-855
- **LEONARD KLEINROCK.** Queueing Systems. John Wiley & Sons, 1975, vol. I

13